# EUROPÄISCHE PATENTSCHRIFT

(11) **EP 0 889 676 B1**
(45) Veröffentlichungstag und Bekanntmachung des Hinweises auf die Patenterteilung: **13.02.2002**
(21) Anmeldenummer: 98110017.5
(22) Anmeldetag: 02.06.1998
(51) Int. Cl.: H05B 41/02, H05B 41/14, H05B 41/24, H05B 41/23, H05B 41/16, H05B 39/04, H05B 37/02, G05F 1/00

(54) **Spannungsgeregeltes Vorschaltgerät für Gasentladungslampen**
Ballast for dicharge lamp with voltage-controller
Ballast pour lampe à décharge à régulateur de tension

(30) Priorität: 05.07.1997 DE 19728847
(43) Veröffentlichungstag der Anmeldung: 07.01.1999
(73) Patentinhaber: Vossloh-Schwabe Elektronik GmbH, 73660 Urbach (DE)
(72) Erfinder: Knobloch, Gert, 73655 Plüderhausen (DE); Haaf, Peter, 73614 Schorndorf (DE)
(74) Vertreter: Patentanwälte Rüger, Barthelt & Abel

(56) Entgegenhaltungen:
- WO-A-90/11004
- DE-A- 3 243 316
- GB-A- 2 163 014

## Beschreibung

Die Erfindung betrifft ein Vorschaltgerät für Gasentladungslampen, das insbesondere für Leuchtstofflampen geeignet ist. Es handelt sich um ein fremdgesteuertes Vorschaltgerät, bei dem die Betriebsfrequenz der Gasentladungslampe von einer Oszillatorschaltung vorgegeben wird.

Bei Gasentladungslampen ist es häufig zu wünschen und bei modernen Gasentladungslampen meist unerlässlich, dass die von der Gasentladungslampe umgesetzte Leistung kontrolliert wird. Erfolgt dies nicht, kann die Gasentladungslampe überlastet werden, wodurch ihre Lebensdauer verkürzt wird oder im schlimmsten Fall ein sofortiger Defekt auftritt.

Aus der WO 90/11004 ist ein fremdgesteuertes elektronisches Vorschaltgerät für Gasentladungslampen bekannt. Das Vorschaltgerät weist eine Oszillatorschaltung auf, mit der ein Flusswandler gesteuert wird. Dieser wird durch eine Speicherdrossel, einen von dem Oszillator gesteuerten elektronischen Schalter gebildet. An den Flusswandler ist eine auf zwei unterschiedliche Polaritäten umschaltbare kapazitive Speicherschaltung angeschlossen. Die Speicherdrossel ist dazu unmittelbar mit dem Speicherkondensator verbunden, wobei der Verbindungspunkt über den elektronischen Schalter gegen Masse geschaltet ist. Der elektronische Schalter ist durch die Oszillatorschaltung mit Hochfrequenz (50 kHz) geschaltet. Zur Steuerung des Lampenstroms ist der Oszillator mit einem Steuereingang versehen, der mit einer aus dem Lampenstrom abgeleiteten Steuerspannung beaufschlagt ist.

Darüber hinaus ist aus der GB 2163014A ein elektronisches Vorschaltgerät mit einem Wechselrichter bekannt, der von einem Festfrequenzoszillator gesteuert ist. Zur Ansteuerung der Wechselrichtertransistoren dient ein Steuertransformator, der über einen Koppelkondensator an den frequenzbestimmenden Oszillator angeschlossen ist. Der Kondensator bildet mit einer weiteren Spule einen Resonanzkreis zur Ankoppelung des Steuertransformators.

Aus der EP 0605052 A1 ist ein elektronisches Vorschaltgerät für Leuchtstofflampen bekannt, das eine Stromüberwachungsschaltung für den Lampenstrom enthält. Zur Erzeugung der Lampenwechselspannung dient eine Wechselrichterbrücke, die von einem spannungsgesteuerten Oszillator (VCO) geführt wird. An den Ausgang der Wechselrichterbrücke ist ein Reihenresonanzkreis zur Speisung der Leuchtstofflampe angeschlossen. An dem masseseitigen Fußpunkt der Gasentladungslampe wird über einen Shunt ein Stromsignal abgegriffen, das als Spannung einer Filterschaltung zugeführt wird. Die an dem Filterausgang anstehende Gleichspannung kennzeichnet den durch die Leuchtstofflampe fliessenden Strom. Von dieser Spannung wird der VCO gesteuert. Der VCO und der an die Wechselrichterbrücke angeschlossene Reihenresonanzkreis sind so bemessen, dass der VCO sowohl auf der Resonanzfrequenz des Reihenresonanzkreises, als auch bei höheren Frequenzen arbeiten kann. Bei zunehmendem Lampenstrom und insbesondere wenn der Lampenstrom zu groß wird, erhöht der VCO seine Frequenz und führt den Reihenresonanzkreis somit aus dem Resonanzbetrieb heraus.

Die zur Siebung des Stromsignals erforderliche Filterschaltung ist insbesondere hinsichtlich ihrer Nullstellen auf das Frequenzverhalten der Leuchtstofflampe abgestimmt. Dies kann zu Problemen führen, wenn unterschiedliche Lampentypen Verwendung finden sollen. Außerdem sind schon wegen des zu realisierenden Filters relativ viele Bauelemente erforderlich. Außerdem kann sich bei sprungartigen Übergangsvorgängen eine gewisse Reaktionszeit bemerkbar machen.

Davon ausgehend ist es Aufgabe der Erfindung, ein Vorschaltgerät für Gasentladungslampen insbesondere Leuchtstofflampen zu schaffen, das bei einfachem Aufbau einen sicheren Betrieb der Gasentladungslampen gestattet.

Diese Aufgabe wird mit dem Vorschaltgerät gelöst, das die Merkmale des Patentanspruchs 1 aufweist.

Anstelle des bekannten VCO wird bei dem erfindungsgemäßen Vorschaltgerät ein Steueroszillator verwendet, dessen Frequenz durch gepulste und phasenrichtige Zuführung von Ladungspakten zu der Oszillatorschaltung verändert wird. Die Größe der Ladungspakete bestimmt dabei die Größe der auftretenden Frequenzveränderung. Dies ergibt einen Aufbau mit extrem kurzer Reaktionszeit. Übersteigt die Lampenspannung bspw. nur für eine Schwingungsperiode den vorgegebenen Maximalwert, wird durch die Ladungsinjektorschaltung sofort ein Ladungspaket an die Oszillatorschaltung übergeben, die sofort eine Frequenzänderung vollzieht. Die Steuerung der Oszillatorschaltung erfolgt auf diese Weise taktweise, d.h. Periode für Periode und nicht integral über mehrere Perioden gemittelt, wie es bei VCO-Schaltungen der Fall ist, die eine gesiebte Steuerspannung nutzen.

Die sofortige Reaktion der Oszillatorschaltung wird ermöglicht, indem die gewünschte Strom-, Spannungs- oder Leistungsreglung einzeln oder periodenweise erfolgt. Dabei ist es möglich, an der Gasentladungslampe bspw. die Spannung zu überwachen und diese konstant zu halten. Dazu ist die Ladungsinjektorschaltung mit einem Schaltungspunkt verbunden, an dem die Lampenspannung oder eine anderweitige Spannung anliegt, die die Lampenspannung kennzeichnet. Alternativ kann die Ladungsinjektorschaltung an einen Stromsensor (Shunt oder Stromwandler) oder an einen Leistungssensor angeschlossen sein.

Das erfindungsgemäße Vorschaltgerät kann die Ladungsinjektorschaltung bspw. lediglich zur Begrenzung der Lampenspannung als Sicherheitsschaltung enthalten. In diesem Fall ist die Lampenspannung mehr oder weniger ungeregelt und mit der Ladungsinjektorschaltung wird lediglich verhindert, dass die Lampenspannung einen Grenzwert übersteigt. Bevorzugt ist jedoch eine Ausführungsform, bei der die Lampenspannung von der auf die Oszillatorschaltung einwirkenden Ladungsinjektorschaltung auf einen möglichst konstanten Wert geregelt wird. Dies ermöglicht einen sicheren Betrieb unterschiedlicher Gasentladungslampen an ein und demselben Vorschaltgerät.

An dem Vorschaltgerät kann neben der Regelung der Lampenspannung und/oder des Lampenstroms mittels der Ladungsinjektorschaltung eine zusätzliche Regeleinrichtung oder Steuerung vorgesehen sein, die die Oszillatorfrequenz auf andere Weise beeinflusst. Es kann dem frequenzbestimmenden Kondensator bspw. ein weiterer Kondensator in Reihe (oder parallel) geschaltet sein, dem ein Schalter oder ein veränderbarer Widerstand (Transistor) parallel (oder in Reihe) geschaltet ist. Damit läßt sich sowohl durch die Ladungspaketinjektion einzelimpulsweise als auch integral durch eine entsprechende Steuerspannung die Frequenz der Oszillatorschaltung wie gewünscht verändern, womit der Betrieb der Wechselrichterschaltung und somit auch der Betrieb des Reihenresonanzkreis festgelegt werden.

Die Oszillatorschaltung ist vorzugsweise eine Kippschaltung, bspw. ein astabiler Multivibrator mit einer einzigen RC-Kombination als frequenzbestimmendes Glied. Der Widerstand der RC-Kombination bildet hier einen Umladepfad zur Auf- und Entladung des Kondensators, dessen Ladung und Spannung somit im Takt der Oszillatorschwingung zu- und abnimmt. Während der Kondensator aufgeladen wird, nimmt die Kippschaltung ihren ersten Zustand ein, und sie nimmt ihren zweiten Zustand ein, wenn der Kondensator entladen wird. Wird bspw. jeweils während der Entladephase des Kondensators ein zusätzliches Ladungspaket auf den Kondensator aufgebracht, verlängert sich die Entladezeit und insgesamt nimmt die Oszillatorfrequenz ab. Wird das zusätzliche Ladungspaket hingegen während der Aufladephase auf den Kondensator aufgebracht, ist der Kondensator schneller aufgeladen als er es allein über den Umladepfad wäre und somit nimmt die Oszillatorfrequenz zu. Wird während der Aufladephase ein negatives Ladungspaket aufgebracht, wird das Aufladen verlangsamt und die Frequenz nimmt ab.

Ist die Phasenlage der zusätzlich eingesteuerten Ladungspakete zu der Oszillatorfrequenz starr, kann allein über die Größe der zusätzlichen Ladungspakete die Frequenz der Oszillatorschaltung gesteuert werden. Ladungspakete vorgegebener Polarität (bspw. positiv) werden vorzugsweise immer nur während der Aufladephase oder der Entladephase, nicht aber während beider Phasen aufgebracht. Gleiches gilt für Ladungspakete anderer Polarität.

Der Injektorstrompfad ist vorzugsweise rein resistiv ausgebildet. Er enthält somit weder induktive Bauelemente noch Kondensatoren, die eine Filtercharakteristik definieren würden. Dies ermöglicht einen einfachen Aufbau mit wenigen Bauelementen und eine von Filterkurven unbeeinflusste Reaktion der Oszillatorschaltung. Damit kann eine präzise und schnelle Spannungsreglung erreicht werden.

Der Injektorstrompfad enthält sowohl eine Vergleicherschaltung, die bspw. die Lampenwechselspannung mit einem Sollwert vergleicht, als auch einen Schalter, der kurzzeitig öffnet, wenn der Augenblickswert der Lampenwechselspannung größer als der vorgegebene Soll- oder Grenzwert ist. Beide Funktionen können in einem geeigneten Zweipolelement entsprechender Kennlinien, bspw. einer Z-Diode vereinigt sein. Diese wird bspw. nur dann leitend, wenn die Lampenwechselspannung einen Schwellwert übersteigt, wobei dann während der entsprechenden Halbwelle der Lampenwechselspannung so lange ein Stromfluss zugelassen wird, wie der Augenblickswert der Lampenwechselspannung größer als der Schwellwert ist. Die Größe des fliessenden Stroms und somit die Größe des Ladungspakets läßt sich durch Widerstände beeinflussen, die mit der Z-Diode in Reihe geschaltet sind. Je größer die Lampenspannung ist, desto größer ist auch das von der Z-Diode durchgelassene Ladungspaket und entsprechend wird die Oszillatorfrequenz geändert. Soll die Schaltung nicht als Spannungsbegrenzer sondern als Spannungsregler arbeiten, ist es zweckmäßig, wenn die Z-Spannung der Z-Diode so bemessen ist, dass sie auch dann leitend wird, wenn die Lampenspannung ihren Sollwert aufweist. Der Regler ist somit in seinem aktiven Bereich. Steigt die Lampenspannung etwas, wird er von den Reihenwiderständen durchgelassene Strom (die Ladungspakete) größer, was der Spannungserhöhung über die Verminderung der Oszillatorfrequenz entgegenwirkt. Umgekehrtes gilt für ein Absinken der Lampenspannung.

Zusätzlich oder alternativ kann eine Regelung der Lampenspannung und/oder des Lampenstroms bewirkt werden, indem die Phasenlage der von der Injektorschaltung durchgelassenen Ladungspakete in Bezug auf die Oszillatorfrequenz geändert wird. Ladungspakete, die bspw. zeitlich gesehen symmetrisch zu den Umschaltpunkten in der Kippschaltung eingespeist werden, verändern das Tastverhältnis der Oszillatorausgangsspannung, und zusätzlich die Frequenz in geringem Maß. Damit ist die von der Injektorschaltung erbrachte Regelung relativ unempfindlich gegen geringe Phasenveränderungen. Dieser Effekt vermeidet Fehler, wenn die Injektorschaltung an einen Reihenresonanzkreis angeschlossen ist, der eine Phasendrehung verursacht sobald er mit Verstimmung arbeiten muß.

Weitere vorteilhafte Einzelheiten von Ausführungsformen der Erfindung ergeben sich aus der Zeichnung sowie der dazugehörigen Beschreibung. In der Zeichnung ist ein Ausführungsbeispiel der Erfindung veranschaulicht. Es zeigen:
Fig. 1 das erfindungsgemäße Vorschaltgerät in einem ausschnittsweisen Prinzipschaltbild,
Fig. 2 ein erfindungsgemäßes Vorschaltgerät mit zusätzlicher konventioneller Frequenzbeeinflussung als Prinzipschaltbild, und
Fig. 3 den prinzipiellen zeitlichen Verlauf ausgewählter Spannungen der Schaltung nach Figur 2.

### Beschreibung

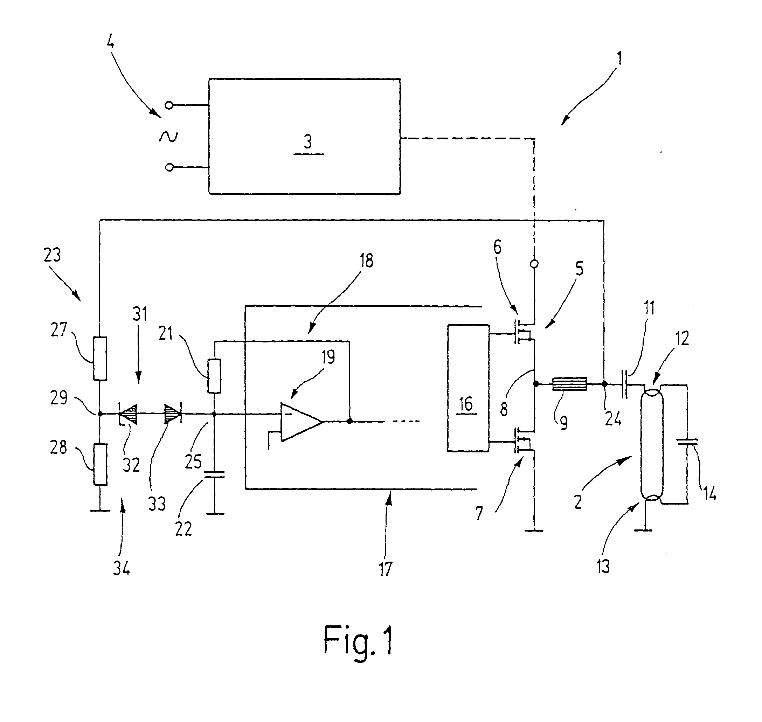

In Figur 1 ist ausschnittsweise ein Vorschaltgerät 1 für eine Leuchtstofflampe 2 veranschaulicht, die von dem Vorschaltgerät 1 gespeist wird. Das Vorschaltgerät 1 erhält seine zum Betrieb erforderliche Gleichspannung in Höhe von mehreren 100 Volt (bspw. 410 Volt) von einer vorgeschalteten Speisebaugruppe 3, die mit Netzwechselspannung 4 gespeist ist. Die Speisebaugruppe 3 wird bspw. durch einen Gleichrichter mit einem nachgeschalteten Hochsetzsteller gebildet. Die Speisebaugruppe 3 dient der Versorgung eines Wechselrichters 5, der durch zwei miteinander in Reihe geschaltete Schalttransistoren (Mosfet) 6,7 gebildet ist. Die Drain-Source-V 8 der beiden Schalttransistoren 6, 7 führt über ein Spulenbauelement 9 und einen Koppelkondensator 11 zu einer ersten Elektrode 12 der Leuchtstofflampe 2, deren andere Elektrode 13 an Masse liegt. Die Elektroden 12, 13 sind als Glühwendeln ausgebildet und parallel zu der Leuchtstofflampe 2 über einen Kondensator 14 miteinander verbunden. Das Spulenbauelement 9 und der Kondensator 14 bilden einen Reihenresonanzkreis zwischen der Drain-Source-Verbindung 8 und Masse.

Der Wechselrichter 5 ist mit einer Ansteuerbaugruppe 16 verbunden, die die beiden Steuerelektroden (Gates) der beiden Schalttransistoren 6, 7 ansteuert. Die Ansteuerbaugruppe 16 kann Teil einer integrierten Schaltung 17 sein, in die vorzugsweise auch ein Steueroszillator 18 integriert ist. Der Steueroszillator 18 gibt dadurch die Frequenz vor, mit der die an dem Wechselrichter 5 anliegende Gleichspannung in eine rechteckige Wechselspannung umgesetzt wird.

Der Steueroszillator 18 ist als Kipposzillator ausgebildet und weist einen verstärkenden und invertierenden Signalpfad 19 auf. Zur Rückkopplung dient ein ohmscher Widerstand 21, der Teil der Außenbeschaltung der integrierten Schaltung 17 ist. Der von dem Ausgang zu dem Eingang des Signalpfads 19 führende Widerstand 21 bildet einen Umladepfad für einen Kondensator 22, der von dem Eingang des Signalpfads 19 gegen Masse geschaltet ist. Über den Widerstand 21 wird der Kondensator 22 auf- und entladen, wenn der Steueroszillator 18 schwingt. Der Widerstand 21 und der Kondensator 22 legen dabei die Schwingfrequenz des Steueroszillators 18 fest.

Zur Regelung der an der Leuchtstofflampe 2 anliegenden Spannung dient eine Ladungsinjektorschaltung 23, deren Eingang mit dem Verbindungspunkt 24 zwischen dem Spulenbauelement 9 und dem Koppelkondensator 11 und deren Ausgang mit dem Verbindungspunkt 25 zwischen dem Widerstand 21 und dem Kondensator 22 verbunden ist. Die Ladungsinjektorschaltung 23 wird durch einen aus zwei Widerständen 27, 28 gebildeten Spannungsteiler gebildet, deren Verbindungspunkt 29 über einen Strompfad mit dem Verbindungspunkt 25 verbunden ist, wobei der Strompfad eine aus einer Z-Diode 32 sowie einer zu dieser in Reihe geschalteten Diode 33 gebildete Vergleicherschaltung 31 enthält. Der Widerstand 27 kann zu Erhöhung der Spannungsfestigkeit durch eine Reihenschaltung mehrere Einzelwiderstände gebildet sein.

Das in soweit beschriebene Vorschaltgerät 1 arbeitet wie folgt:

Der Steueroszillator 18 ist so eingestellt, dass er in unbeeinflusstem Betrieb, d.h. wenn die Ladungsinjektorschaltung 23 passiv ist und von dem Verbindungspunkt 29 ausgehend keine Ladungspakete zu dem Verbindungspunkt 25 durchgelassen werden mit einer Frequenz arbeitet, die etwa der Resonanzfrequenz des aus dem Spulenbauelement 9 und dem Kondensator 14 gebildeten Reihenresonanzkreises entspricht. Dieser weist somit an dem Verbindungspunkt 24, an dem die Elektrode 12 der Leuchtstofflampe 2 über den Koppelkondensator 11 angeschlossen ist, eine maximale Spannungsüberhöhung auf. Diese Spannung ist höher als die für die Leuchtstofflampe 2 maximal zulässige Brennspannung.

Bei geregeltem Betrieb des Vorschaltgeräts 1 wird diese Spannung durch Frequenzverminderung des Steueroszillators 19 auf den Sollwert einreguliert. Die Frequenz des Steueroszillators 19 und somit von dem Wechselrichter 5 abgegebenen Wechselspannung wird so lange abgesenkt, bis die Resonanzüberhöhung an dem Verbindungspunkt 24 den Sollwert für die Lampenspannung 2 erreicht. Dies wird durch die Ladungsinjektorschaltung 23 erreicht. Deren Spannungsteiler (Widerstände 27, 28) erzeugt an dem Verbindungspunkt 29 eine Wechselspannung zwischen Null Volt und einem im Bereich von einigen zehn Volt liegenden Maximalwert. Sobald die Spannung sich ihrem Maximalwert nähert, wird die Z-Spannung der Z-Diode 32 erreicht und es tritt ein Stromfluss zu dem Verbindungspunkt 25 auf, der so lange andauert, wie die Spannung an dem Verbindungspunkt 29, vermindert um die Z-Spannung der Z-Diode 32 und die Flussspannung der Diode 33 größer ist als die Spannung an dem Verbindungspunkt 25.

Während der Flusszeit wird ein Ladungspaket auf den Kondensator 22 geschoben. Dies erfolgt bspw. während der Entladephase des Kondensators 22, d.h. während der Phase seiner Schwingungsperiode, in der er über den Widerstand 21 entladen wird. Der Entladevorgang verzögert sich nun, weil über den Widerstand 21 nicht nur die auf dem Kondensator 22 ohnehin gespeicherte Ladung, sondern zusätzlich die über die Z-Diode 32 und die Diode 33 aufgebrachte Ladung (Ladungspaket) entladen werden muß. Dieser Vorgang tritt in jeder Schwingungsperiode erneut auf, wodurch die Schwingfrequenz des Steueroszillators 19 abnimmt.

Die Frequenzabnahme, d.h. die Verlängerung der Entladezeitphasen des Kondensators 22 ist desto größer, umso größer das von der Ladungsinjektorschaltung 23 in jeder Entladephase aufgebrachte Ladungspaket ist. Die Größe des Ladungspakets hängt von der Größe der an dem Verbindungspunkt 29 vorhandenen Spitzenspannung und somit von der an dem Verbindungspunkt 24 erfassten Spannung ab. Steigt die Spannung über den Sollwert, wird die Frequenz durch sich vergrößernde Ladungspakete vermindert, die auf den Kondensator 22 aufgegeben werden. Durch Verminderung der Frequenz wird ein größerer Abstand von der Resonanzfrequenz des Reihenresonanzkreises (Spulenbauelement 9, Kondensator 14) erreicht, womit die Resonanzüberhöhung und somit die Lampenspannung abnimmt bis der Sollwert erreicht ist.

Umgekehrt führt eine zu geringe Lampenspannung zu einer Verringerung der Spannung an dem Verbindungspunkt 29 und somit zu einer Verringerung der zusätzlich auf den Kondensator 22 aufgegebenen Ladungspakete. Damit kann die Frequenz des Oszillators 18 zunehmen, wodurch die Frequenz des Wechselrichters 5 näher an den Resonanzpunkt herangebracht wird. Die Lampenspannung nimmt dadurch zu, bis der Sollwert erreicht ist. Auf diese Weise wird eine konstante Ausreglung der Lampenspannung auf einfachste Weise und nahezu ohne Einschwingzeit realisiert. Die Lampenspannung wird praktisch taktweise, d.h. in jeder Schwingungsperiode gesondert kontrolliert und eingestellt. Es lässt sich dadurch eine sehr präzise und schnelle Spannungsreglung erreichen.

Durch geeignete Dimensionierung kann die in Figur 1 veranschaulichte Schaltung anstelle zu Spannungsreglung auch lediglich zu Spannungsbegrenzung herangezogen werden. Dies wird dann erreicht, wenn die Ladungsinjektorschaltung 23 ausschliesslich dann aktiv wird, wenn an dem Verbindungspunkt 24 eine Grenzspannung überschritten wird. Liegt die Spannung an diesem Verbindungspunkt in einem darunter liegenden Bereich, werden keine Ladungspakete auf den Kondensator 22 aufgegeben und der Steueroszillator 19 läuft unbeeinflusst von der Ladungsinjektorschaltung 23. Erst wenn die Grenzspannung an dem Verbindungspunkt 24 überschritten wird, kommt die Z-Diode 32 in Durchbruchbetrieb und vermindert die Frequenz des Steueroszillators 19.

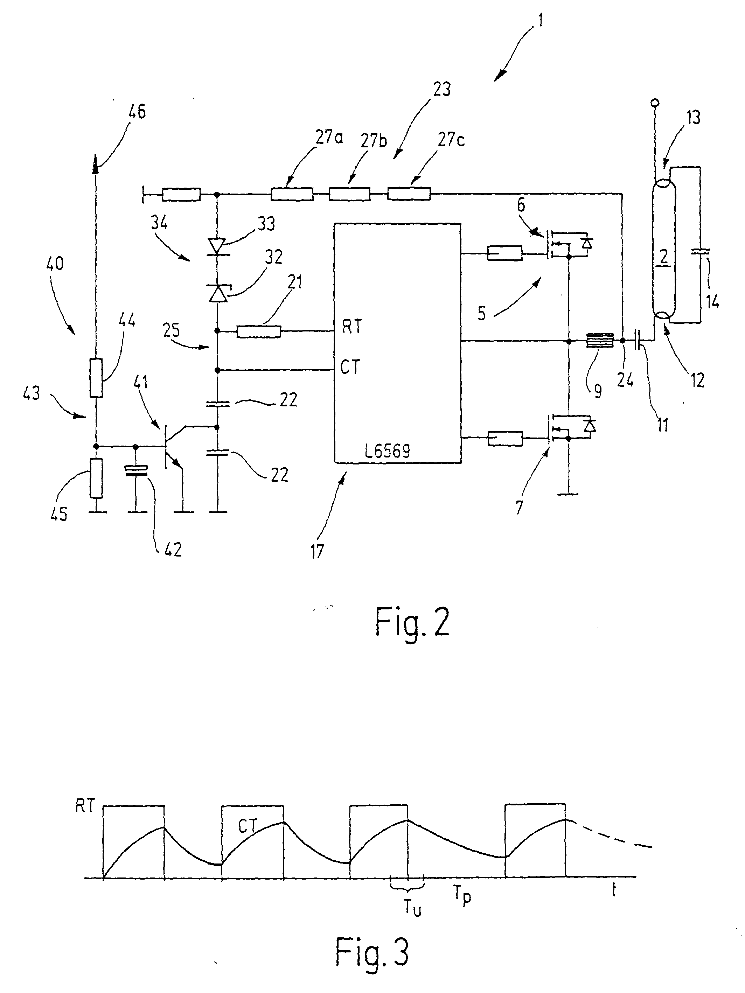

Eine abgewandelte Ausführungsform des Vorschaltgeräts 1 ist aus Figur 2 ersichtlich. Die Leuchtstofflampe 2 ist wiederum an einen aus dem Spulenbauelement 9 und dem Kondensator 14 gebildeten Resonanzkreis angeschlossen. Der Koppelkondensator 11 dient der Unterdrückung von Gleichanteilen im Lampenstrom. Der Ansteuerung des Wechselrichters 6 dient die integrierte Schaltung 17, die durch das kommerziell verfügbare Bauelement L6569 gebildet wird. Die Eingänge des Steueroszillators sind RT und CT die mit einer aus dem Widerstand 21 sowie den Kondensatoren 22, 22' bestehenden RC-Kombination geschaltet sind. Abweichend von der vorstehend beschriebenen Ladungsinjektorschaltung 23 weist die hier verwendete Ladungsinjektorschaltung 23 als oberen Spannungsteilerwiderstand Reihenwiderstände 27a, 27b, 27c auf, die von dem Verbindungspunkt 24 zu der Vergleicherschaltung 34 führen. Diese ist aus der Diode 33 und der Z-Diode 32 gebildet, die antiparallel in Reihe geschaltet sind. Die Z-Diode 32 legt mit ihrer Kathode an dem Verbindungspunkt 25.

Zusätzlich zu der von der Ladungsinjektorschaltung 23 gebildeten Regelschaltung enthält das Vorschaltgerät 1 nach Figur 2 einen weiteren Regeleingriff 40. Die frequenzbestimmende RC-Kombination des Steueroszillators enthält die miteinander in Reihe geschalteten Kondensatoren 22, 22'. Der gegen Masse geschaltete Transistor 22' ist durch einen steuerbaren Schalter bspw. einen Transistor 41 überbrückbar, dessen hier mit der Kollektorstrecke parallel zu dem Kondensator 22' angeordnet ist. Die Basis des Transistors ist mit einem Pufferkondensator 42 an Masse gelegt, so dass Wechselspannungen von der Basis ferngehalten werden. Das Potential der Basis wird über einen Spannungsteiler 43 festgelegt, zu dem die Widerstände 44, 45 gehören. Der Eingang 46 des Spannungsteilers bildet einen Regeleingang. Wenn der Eingang so weit positiv gemacht ist, dass der Transistor 41 durchschaltet, wird der Kondensator 22' überbrückt, wodurch die frequenzbestimmende Kapazität der RC-Kombination zunimmt. Dadurch sinkt die Schwingfrequenz.

Unabhängig davon wird die Frequenz durch die Ladungsinjektorschaltung 23 beeinflusst, die mit zunehmender Spannung an dem Verbindungspunkt 24 größere Ladungspakete phasenrichtig auf den Kondensator 22 schiebt, so dass dessen Entladezeit verlängert wird. Damit nimmt die Schwingfrequenz ab und es wird der Abstand der Arbeitsfrequenz von der Resonanzfrequenz erhöht, wodurch die Lampenspannung wieder auf ihren Sollwert sinkt. Umgekehrt nimmt die Arbeitsfrequenz zu, wenn die Spannung an dem Verbindungspunkt 24 unter den Sollwert sinkt und kleine oder gar keine Ladungspakete auf dem Kondensator 22 geschoben werden.

Die Verhältnisse sind in Figur 3 veranschaulicht. RT bezeichnet die rechteckförmige Ausgangsspannung, mit der der Steueroszillator arbeitet. CT ist die an dem Kondensator 22 anliegende Spannung. In Figur 3 ist links neben der gestrichelten Linie der Spannungsverlauf bei inaktiver Ladungsinjektorschaltung dargestellt. Rechts der Trennlinie ist dargestellt, wie sich das Entladen des Kondensators 22 verzögert, wenn während des Entladungsvorgangs über die Ladungsinjektorschaltung 23 zusätzliche Ladung auf dem Kondensator 22 gegeben wird.

Die Ladungsinjektorschaltung 23 kann auch zur Erhöhung der Frequenz des Steueroszillators verwendet werden, wenn mit der Erhöhung eine Entfernung von der Resonanzfrequenz bewirkt werden soll. Sie wird dann an einen um 180° phasenversetzt arbeitenden Schaltungspunkt angeschlossen, so dass die Aufladezeit des Kondensators 22 durch Aufgabe zusätzlicher Ladungspakete vermindert wird.

Bei einer alternativen Ausführungsform wird zusätzlich die Phasenlage der Aufgabe der Ladungspakete auf den Kondensator 22 geändert. Wird bei der Ausführungsform nach den Figuren 1 und 2 das Ladungspaket während der Pausenzeit TP (Figur 3) auf den Kondensator 22 gegeben, ist es zusätzlich möglich, die Phasenlage zur Regelung heranzuziehen. Erfolgt die Aufgabe eines Ladungspakets bspw. symmetrisch zum Umschaltzeitpunkt während einer Zeit TU, bewirkt dieses Ladungspaket eine Verkürzung der Aufladephase und eine Verlängerung der Entladephase, wodurch in der Summe allenfalls eine sehr geringe Frequenzveränderung erzielt wird. Wird das Ladungspaket nun früher aufgegeben, verkürzt sich die Aufladezeit und die Frequenz nimmt zu. Wird es später aufgegeben, verlängert sich die Entladezeit und die Frequenz nimmt ab. Auf diese Weise läßt sich die Phasenlage zur Frequenzsteuerung heranziehen.

Ein elektronisches, fremdgesteuertes Vorschaltgerät 1 weist einen Steueroszillator 18 auf, der über eine Wechselrichterbrücke 5 und einen Resonanzkreis eine Leuchtstofflampe 2 speist. Zur Konstanthaltung der Spannung werden aus der Lampenwechselspannung Ladungspakete abgeleitet deren Größe (und/oder Phasenlage) die Größe der Lampenwechselspannung kennzeichnet. Die Ladungspakete werden auf einen frequenzbestimmenden Kondensator 22 des als Kipposzillator ausgelegten Oszillators 18 geleitet, womit eine Spannungsregelung erzielt wird. Diese ist robust, einfach, vermeidet unerwünschte Regelschwingungen und ergibt eine gute Spannungskonstanz.

## Patentansprüche

1. Vorschaltgerät (1) für Gasentladungslampen (2), insbesondere Leuchtstofflampen,
mit einer frequenzbestimmenden Oszillatorschaltung (18), die eine frequenzbestimmende RC-Kombination mit einem Kondensator (22) aufweist, dessen Ladung im Takt der Schwingfrequenz der Oszillatorschaltung (18) alternierend zwischen einem Maximalwert und einem Minimalwert zu- und abnimmt,
mit einer Wechselrichterschaltung (5), die eine bereitgestellte Gleichspannung mit der von der Oszillatorschaltung (18) vorgegebenen Frequenz in eine an ihrem Ausgang anstehende Wechselspannung umsetzt, an die ein Reihenresonanzkreis (9, 14) zur Speisung der Gasentladungslampe (2) angeschlossen ist,
**dadurch gekennzeichnet, dass** eine Ladungsinjektorschaltung (23) vorgesehen ist, die einen Injektorstrompfad (11, 27, 31) von der Gasentladungslampe (2) zu dem Kondensator (22) aufweist, über den mit einer mit der Kondensatorwechselspannung synchronisierten Frequenz Ladungspakete auf den Kondensator (22) geleitet werden können, deren Größe und/oder Phasenlage von der an der Gasentladungslampe (2) anliegenden Spannung und/oder dem sie durchfließenden Strom abhängig ist.

2. Vorschaltgerät nach Anspruch 1, **dadurch gekennzeichnet, dass** die Oszillatorschaltung (18) eine Kippschaltung ist.

3. Vorschaltgerät nach Anspruch 2, **dadurch gekennzeichnet, dass** die Oszillatorschaltung (18) zwei astabile Zustände aufweist und dass sie den Zusatand jeweils wechselt, wenn die Ladung des Kondensators (22) ihren Maximalwert oder ihren Minimalwert erreicht.

4. Vorschaltgerät nach Anspruch 2, **dadurch gekennzeichnet, dass** der Kondensator (22) mit einem Umladepfad (21) verbunden ist, über den der Kondensator (22) aufge-bzw. entladen wird, während sich die Oszillatorschaltung (18) in seinem jeweiligen astabilen Zustand befindet.

5. Vorschaltgerät nach Anspruch 4, **dadurch gekennzeichnet, dass** der Umladepfand ein resistiver Strompfad mit Mitkopplungscharakteristik ist.

6. Vorschaltgerät nach Anspruch 3, **dadurch gekennzeichnet, dass** die Oszillatorschaltung (18) eine Komparatorschaltung enthält, die die an dem Kondensator (22) anstehende Spannung erfaßt, so dass die Verweilzeit des Oszillatorschaltung (18) in ihrem jeweiligen Verweilzustand von der Größe der über den Umladepfad (21) auf den Kondensator (22) aufzubringenden bzw. abzubauenden Ladung bestimmt ist.

7. Vorschaltgerät nach Anspruch 1, **dadurch gekennzeichnet, dass** der Injektorstrompfad (11, 27, 31) für die Schwingfrequenz der Oszillatorschaltung (18) rein resistiv ausgebildet ist.

8. Vorschaltgerät nach Anspruch 1, **dadurch gekennzeichnet, dass** der Injektorstrompfad (11, 27, 31) eine Vergleicherschaltung (31) enthält, die den Injektorstrompfad (11, 27, 31) wenigstens kurzzeitig leitend macht, wenn der Augenblickswert der Lampenwechselspannung einen voreingestellten Grenzwert überschreitet.

9. Vorschaltgerät nach Anspruch 7, **dadurch gekennzeichnet, dass** der Injektorstrompfad (11, 27, 31) wenigstens ein Element (32) mit nichtlinearer Kennlinie aufweist.

10. Vorschaltgerät nach Anspruch 9, **dadurch gekennzeichnet, dass** der Injektorstrompfad (11, 27, 31) eine bezüglich des Nullpunkts asymmetrische Kennlinie aufweist.

11. Vorschaltgerät nach Anspruch 9, **dadurch gekennzeichnet, dass** der Injektorstrompfad (11, 27, 31) wenigstens eine Z-Diode (32) enthält.

12. Vorschaltgerät nach Anspruch 9, **dadurch gekennzeichnet, dass** der Injektorstrompfad (11, 27, 31) wenigstens eine Diode (33) enthält.

13. Vorschaltgerät nach Anspruch 1, **dadurch gekennzeichnet, dass** die Resonanzfrequenz des Reihenresonanzkreises (9, 14) derart festgelegt ist, dass sich die Umrichtfrequenz des Wechselrichters (5) mit zunehmender Größe der von dem Injektorstrompfad (11, 27, 31) durchgelassenen Ladungspakete von der Resonanzfrequenz des Reihenresonanzkreises (9 ,14) vorzugsweise zu niedrigeren Frequenzen hin entfernt.

14. Vorschaltgerät nach Anspruch 13, **dadurch gekennzeichnet, dass** der Injektorstrompfad (11, 27, 31) derart ausgelegt und bemessen ist, dass keine Ladungspakete durchgelassen werden, wenn die an der Gasentladungslampe (2) anstehende Spannung geringer ist als ein vorbestimmter Grenzwert, und dass, wenn die Lampenspannung den Grenzwert übersteigt, Ladungspakete durchgelassen werden, deren Größe mit steigender Lampenspannung zunimmt.

15. Vorschaltgerät nach Anspruch 14, **dadurch gekennzeichnet, dass** die Zunahme der Größe der Ladungspakete zu der Lampenspannung überproportional ist.

16. Vorschaltgerät nach Anspruch 13, **dadurch gekennzeichnet, dass** der Injektorstrompfad (11, 27, 31) derart ausgelegt und bemessen ist, dass kleinere Ladungspakete durchgelassen werden, wenn die an der Gasentladungslampe (2) anstehende Spannung in einer ersten Richtung von einem vorbestimmten Sollwert abweicht, und dass, die Größe der Ladungspakete zunimmt, wenn die Lampenspannung in einer anderen Richtung von dem Sollwert abweicht.

## Claims

1. Ballast (1) for electric discharge lamps (2), in particular fluorescent lamps,
having a frequency-determining oscillator circuit (18), which has a frequency-determining RC combination with a capacitor (22), the charge of which increases and decreases in the cycle of the frequency of oscillation of the oscillator circuit (18) alternating between a maximum value and a minimum value,
having a rectifier circuit (5), which converts a ready d.c. voltage with the frequency given by the oscillator circuit (18) into an alternating voltage present at its output, to which a series resonance circuit (9, 14) is connected to feed the electric discharge lamp (2),
**characterised in that** a charge injector circuit (23) is provided, which has an injector current path (11, 27, 31) from the electric discharge lamp (2) to the capacitor (22), via which charge bundles can be conducted onto the capacitor (22) with a frequency synchronised with the capacitor alternating voltage, their magnitude and/or phase relation being dependent on the voltage present at the electric discharge lamp (2) and/or the current flowing through this.

2. Ballast according to Claim 1, **characterised in that** the oscillator circuit (18) is a trigger circuit.

3. Ballast according to Claim 2, **characterised in that** the oscillator circuit (18) has two astable states, and that it respectively changes the state when the charge of the capacitor (22) reaches its maximum value or its minimum value.

4. Ballast according to Claim 2, **characterised in that** the capacitor (22) is connected to a charge exchange path (21), via which the capacitor (22) is charged or discharged while the oscillator circuit (18) is in its respective astable state.

5. Ballast according to Claim 4, **characterised in that** the charge exchange path is a resistive current path with positive feedback characteristic.

6. Ballast according to Claim 3, **characterised in that** the oscillator circuit (18) contains a comparator circuit, which detects the voltage present at the capacitor (22) so that the dwell time of the oscillator circuit (18) in its respective dwell state is determined from the magnitude of the charge to be applied or decreased via the current path (21) onto the capacitor (22).

7. Ballast according to Claim 1, **characterised in that** the injector current path (11, 27, 31) for the oscillation frequency of the oscillator circuit (18) is of purely resistive configuration.

8. Ballast according to Claim 1, **characterised in that** the injector current path (11, 27, 31) contains a comparator circuit (31) which makes the injector current path (11, 27, 31) conductive at least for a short period, when the instantaneous value of the lamp alternating voltage exceeds a preset limit value.

9. Ballast according to Claim 7, **characterised in that** the injector current path (11, 27, 31) has at least one element (32) with a non-linear characteristic curve.

10. Ballast according to Claim 9, **characterised in that** the injector current path (11, 27, 31) has an asymmetric characteristic curve relative to zero.

11. Ballast according to Claim 9, **characterised in that** the injector current path (11, 27, 31) contains at least one Z-diode (32).

12. Ballast according to Claim 9, **characterised in that** the injector current path (11, 27, 31) contains at least one diode (33).

13. Ballast according to Claim 1, **characterised in that** the resonance frequency of the series resonance circuit (9, 14) is fixed such that with increasing magnitude of the charge bundles accepted by the injector current path (11, 27, 31), the conversion frequency of the rectifier (5) moves from the resonance frequency of the series resonance circuit (9, 14) preferably to lower frequencies.

14. Ballast according to Claim 13, **characterised in that** the design and dimensions of the injector current path (11, 27, 31) are such that no charge bundles are accepted when the voltage present at the electric discharge lamp (2) is less than a predetermined limit value, and that, when the lamp voltage exceeds the limit value, charge bundles are accepted whose magnitude increases with increasing lamp voltage.

15. Ballast according to Claim 14, **characterised in that** the increase in magnitude of the charge bundles is superproportional to the lamp voltage.

16. Ballast according to Claim 13, **characterised in that** the design and dimensions of the injector current path (11, 27, 31) are such that smaller charge bundles are accepted when the voltage present at the electric discharge lamp (2) deviates in a first direction from a predetermined desired value, and that the magnitude of the charge bundles increases when the lamp voltage deviates in another direction from the desired value.

## Revendications

1. Ballast (1) pour lampes à décharge, en particulier pour lampes fluorescentes,
avec un circuit oscillateur (18) de détermination de la fréquence, qui comprend une combinaison RC déterminant la fréquence avec un condensateur (22), dont la charge augmente et diminue alternativement entre une valeur maximale et une valeur minimale, à la cadence de la fréquence d'oscillation du circuit oscillateur (18),
avec un circuit onduleur (5) qui convertit, avec la fréquence imposée par le circuit oscillateur (18), une tension continue fournie en une tension alternative disponible à sa sortie et auquel est connecté un circuit résonant en série (9, 14) pour l'alimentation de la lampe à décharge (2),
**caractérisé en ce qu'**il est prévu un circuit injecteur de charge (23) avec un trajet injecteur de courant (11, 27, 31) de la lampe à décharge (2) vers le condensateur (22), par l'intermédiaire duquel des paquets de charge sont envoyés au condensateur (22) avec une fréquence qui est synchronisée avec la tension alternative de condensateur, paquets de charge dont la taille et/ou le phasage dépendent de la tension appliquée à la lampe à décharge (2) et/ou du courant qui la traverse.

2. Ballast selon la revendication 1, **caractérisé en ce que** le circuit oscillateur (18) est un circuit en bascule.

3. Ballast selon la revendication 2, **caractérisé en ce que** le circuit oscillateur (18) présente deux états instables, et **en ce qu'**il change d'état chaque fois que la charge du condensateur (22) atteint sa valeur maximale ou sa valeur minimale.

4. Ballast selon la revendication 2, **caractérisé en ce que** le condensateur (22) est relié à un trajet de chage/décharge (21), par l'intermédiaire duquel le condensateur (22) est chargé ou déchargé pendant que le circuit oscillateur (18) se trouve dans les états instables concernés.

5. Ballast selon la revendication 4, **caractérisé en ce que** le trajet de chage/décharge (21),est un trajet de courant résistif, à réaction positive.

6. Ballast selon la revendication 3, **caractérisé en ce que** le circuit oscillateur (18) comprend un circuit comparateur qui mesure la tension aux bornes du condensateur (22), de telle sorte que le temps de séjour du circuit oscillateur (18) dans son état soit déterminé par la grandeur de la charge à appliquer ou à dissiper au niveau du condensateur, par l'intermédiaire du trajet de chage/décharge (21).

7. Ballast selon la revendication 1, **caractérisé en ce que** le trajet injecteur de courant (11, 27, 31) pour la fréquence d'oscillation du circuit oscillateur (18) est purement résistif.

8. Ballast selon la revendication 1, **caractérisé en ce que** le trajet injecteur de courant (11, 27, 31) comprend un circuit comparateur (31) qui rend le trajet injecteur de courant au moins temporairement conducteur, lorsque la valeur instantanée de la tension alternative de lampe dépasse une valeur seuil préréglée.

9. Ballast selon la revendication 7, **caractérisé en ce que** le trajet injecteur de courant (11, 27, 31) comprend au moins un élément (32) à caractéristique non linéaire.

10. Ballast selon la revendication 9, **caractérisé en ce que** le trajet injecteur de courant (11, 27, 31) présente une courbe caractéristique asymétrique par rapport au zéro.

11. Ballast selon la revendication 9, **caractérisé en ce que** le trajet injecteur de courant (11, 27, 31) contient au moins une diode Zener (32).

12. Ballast selon la revendication 9, **caractérisé en ce que** le trajet injecteur de courant (11, 27, 31) contient au moins une diode (33).

13. Ballast selon la revendication 1, **caractérisé en ce que** la fréquence de résonance du circuit résonant en série (9, 14) est fixée telle, que la fréquence de conversion de l'onduleur (5), lorsque la taille des paquets de charge transmis augmente, s'écarte de la fréquence de résonance du circuit résonant en série (9, 14), de préférence vers les fréquences plus faibles.

14. Ballast selon la revendication 13, **caractérisé en ce que** la trajet injecteur de courant (11, 27, 31) est conçu et dimensionné de telle sorte qu'aucun paquet de charge ne soit transmis, lorsque la tension appliquée à la lampe à décharge (2) est inférieure à une valeur seuil prédéterminée et que, lorsque la tension de lampe est supérieure au seuil des paquets de charge dont la taille augmente avec la tension de lampe soient transmis, lorsque la tension de lampe est supérieure au seuil.

15. Ballast selon la revendication 14, **caractérisé en ce que** l'augmentation de la taille des paquets de charge est proportionnellement supérieure à la tension de lampe.

16. Ballast selon la revendication 13, **caractérisé en ce que** le trajet d'injecteur de courant (11, 27, 31) est conçu et dimensionné de telle sorte que des paquets de charge plus petits soient transmis lorsque la tension appliquée à la lampe à décharge (2) dans un sens s'écarte par rapport à une valeur de consigne prédéterminée et que la taille des paquets de charge augmente lorsque la tension de lampe s'écarte dans l'autre sens par rapport à la valeur de consigne.
